**Europäisches Patentamt**

**European Patent Office**

**Office européen des brevets**

(19)

(11) Veröffentlichungsnummer : **0 053 802**
**B1**

(12) **EUROPÄISCHE PATENTSCHRIFT**

(45) Veröffentlichungstag der Patentschrift :
**18.06.86**

(21) Anmeldenummer : **81110114.6**

(22) Anmeldetag : **03.12.81**

(51) Int. Cl.⁴ : **C 21 C   5/48**

(54) Verfahren und Vorrichtung zum Schutz der Düsen und der feuerfesten Auskleidung eines Gefässes zum Frischen einer Metallschmelze.

(30) Priorität : **05.12.80 DE 3045966**

(43) Veröffentlichungstag der Anmeldung :
**16.06.82 Patentblatt 82/24**

(45) Bekanntmachung des Hinweises auf die Patenterteilung : **18.06.86 Patentblatt 86/25**

(84) Benannte Vertragsstaaten :
**BE CH DE FR GB IT LI LU NL SE**

(56) Entgegenhaltungen :
**DE-A- 2 147 717**
**DE-A- 2 310 776**
**DE-A- 2 741 850**
**DE-A- 2 946 030**
**DE-B- 2 065 901**
**FR-A- 2 085 621**
**US-A- 3 330 645**
**US-A- 3 832 161**
**US-A- 4 066 442**

(73) Patentinhaber : **KORTEC AG**
**Bahnhofstrasse 21**
**CH-6300 Zug (CH)**

(72) Erfinder : **Wells, William, Dipl.-Ing.**
**4610 Carmel Valley Road**
**Charlotte North Carolina (US)**
Erfinder : **Nosé, Dalton, Dipl.-Ing.**
**Rua da Gloria, 344/802**
**20 241 Rio de Janeiro (BR)**

(74) Vertreter : **Blumbach Weser Bergen Kramer Zwirner**
**Hoffmann Patentanwälte**
**Radeckestrasse 43**
**D-8000 München 60 (DE)**

## Beschreibung

Die Erfindung betrifft ein Verfahren und eine Vorrichtung gemäß den Oberbegriffen der Patentansprüche 1 und 11.

Durch die US-A-3 844 768 sind ein Verfahren und eine Vorrichtung dieser Art bekanntgeworden. Zum Frischen chromhaltiger Legierungsstähle werden mittels Düsen aus jeweils wenigstens 3 radial im Abstand voneinander angeordneten konzentrischen Rohren, durch die ein zentraler Kanal und Ringkanäle gebildet werden, Sauerstoff, ein Verdünnungsfluid und ein Schutzfluid unterhalb der Badoberfläche in die Metallschmelze eingeblasen. Der Sauerstoff bzw. ein sauerstoffhaltiges Gas wird hierbei dem zentralen Kanal zugeführt, das Verdünnungsfluid dem sich anschließenden inneren Ringkanal und das Schutzfluid dem äußeren Ringkanal. Das Verdünnungsfluid hat die Aufgabe das sich beim Frischprozeß entwickelnde Kohlenmonoxid zu verdünnen und so den Partialdruck des Kohlenmonoxids herabzusetzen, um den Chromverlust niedrig zu halten, wenn der Kohlenstoffgehalt der Metallschmelze einen vorgegebenen Wert unterschreitet. Als Verdünnungsfluid sind unter anderem Wasserdampf und zerstäubtes Wasser in einem Trägergas geeignet. Das Schutzfluid hat die Aufgabe den Düsenverbrauch herabzusetzen. Es soll aus einer kohlenwasserstoffhaltigen Flüssigkeit, beispielsweise Heizöl bestehen, in dem Wasserdampf oder Wassertröpfchen emulgiert sein können.

Durch die US-A-4 066 442 ist ein Verfahren zur Herstellung von Chromstahl in einem elektrischen Lichtbogenofen bekanntgeworden, bei dem eine chromhaltige Metallschmelze im Ofen dadurch entkohlt wird, daß durch den zentralen Kanal einer aus zwei konzentrischen Rohren bestehenden Düse Sauerstoff und durch den Ringkanal Wasserdampf in die Schmelze unterhalb des Badspiegels eingeblasen wird. Der Wasserdampf, der auch durch vorzugsweise zerstäubtes Wasser ersetzt werden kann, dient hierbei ebenfalls in erster Linie als Verdünnungsfluid zum Verdünnen des Kohlenmonoxids in der Schmelze. Daneben wirkt er als Oxidationsmittel, um die Wirkung des Sauerstoffs zu ergänzen, als Mittel für die thermische Steuerung und auch als Antiverschleißmittel.

Die US-A-3 832 161 beschreibt ein Verfahren zum Frischen einer Metallschmelze mittels einer unterhalb der Badoberfläche angeordneten Dreirohrdüse, durch deren zentralen Kanal Wasserdampf, Wasser oder zerstäubtes, in einem Trägergas suspendiertes Wasser, durch den sich anschließenden inneren Ringkanal Sauerstoff und durch den sich anschließenden äußeren Ringkanal Heizöl eingeblasen werden. Das durch den zentralen Kanal eingeleitete Fluid bewirkt durch endotherme Dissoziation eine Kühlung der überhitzten Zone vor der Düse und verhindert dadurch die Entstehung von braunem Rauch. Das durch den äußeren Ringkanal zugeführte Heizöl dient als Schutzfluid für die Düse.

Aufgabe der Erfindung ist es, bei einem Verfahren der im Oberbegriff des Anspruchs 1 genannten Art den Düsenverbrauch und den Verbrauch an feuerfester Auskleidung zu verringern und damit eine höhere Standzeit der Einblasvorrichtung für das sauerstoffhaltige Gas zu erzielen, sowie eine einfache Vorrichtung für dieses Verfahren zu schaffen.

Das erfindungsgemäße Verfahren ist durch die Merkmale des Anspruchs 1 gekennzeichnet. Vorteilhafte Ausgestaltungen dieses Verfahrens sind den Unteransprüchen 2 bis 10 zu entnehmen. Die erfindungsgemäße Vorrichtung ist durch die Merkmale des Anspruchs 11 gekennzeichnet.

Durch die erfindungsgemäßen Maßnahmen ist es möglich geworden, eine Standzeit der Düsen und der die Düsen umgebenden feuerfesten Auskleidung von 400 Betriebsstunden zu erzielen. Die im Vergleich zu bekannten Verfahren vergrößerte Haltbarkeit der Düsen wird auf die vergrößerte Dissoziationswärme von Hydroxylverbindungen und Wasser im Vergleich zu Kohlenwasserstoffverbindungen sowie auf die verstärkte Kühlung des Düsenhalses beim Erwärmen und Verdampfen des zerstäubten Schutzfluids innerhalb der Düse zurückgeführt. Vorzugsweise liegt der Anteil an Wasser im Gemisch Hydroxylverbindungen und Wasser zwischen 40 und 95 Gewichtsprozenten.

Als Hydroxylverbindungen eignen sich insbesondere flüssige Hydroxylverbindungen, die mit Wasser mischbar sind und durch eine endotherme Dissoziationsreaktion der Umgebung eine möglichst große Wärmemenge entziehen. Insbesondere sind hierfür einwertige oder mehrwertige aliphatische oder aromatische Alkohole geeignet. Vorzugsweise werden die Durchflußmengen der durch die Ringkanäle eingeblasenen Schutzfluide voneinander unabhängig über den Druck geregelt.

Die Erfindung wird durch Ausführungsbeispiele anhand von 2 Figuren näher erläutert. Es zeigen :

Figur 1  eine Einblasvorrichtung zur Durchführung des erfindungsgemäßen Verfahrens bei einem im Schnitt dargestellten Herdofen ;

Figur 2  den die Einblasvorrichtung enthaltenden Abschnitt aus Fig. 1 in vergrößertem Maßstab.

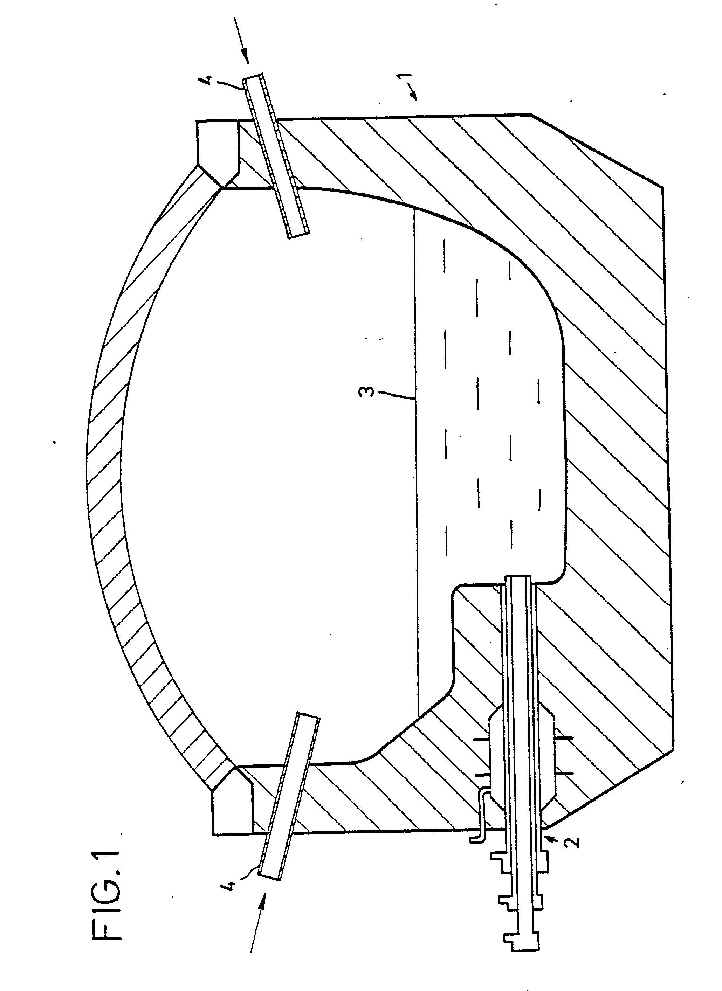

Fig. 1 stellt im Schnitt einen Herdofen 1, wie einen Siemens-Martin-Ofen, dar, durch dessen Seitenwand an wenigstens einer Stelle waagrecht eine Einblasvorrichtung 2 geführt ist, die unterhalb des Badspiegels 3 in das Gefäß mündet. Oberhalb des Badspiegels münden ferner zwei Brenner 4.

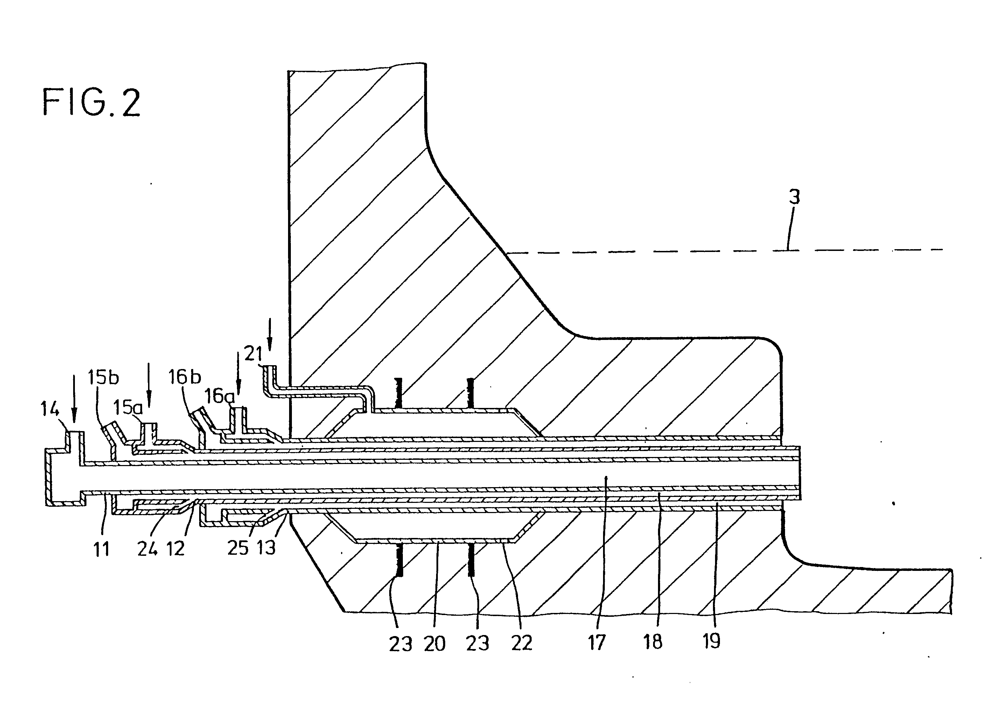

Wie Fig. 2 erkennen läßt, enthält die Manteldüse drei konzentrische, durch Abstandhalter (nicht dargestellt) im Abstand voneinander gehaltene Rohre 11, 12, 13, die Einlässe 14, 15a, 16a für Gase bzw. Gasgemische und Einlässe 15b und 16b für Flüssigkeiten enthalten. Durch diese Rohre wird ein zentraler Kanal 17 und es werden ein erster Ringkanal 18 und ein zweiter Ringkanal 19 gebildet. Die Mündung der Rohre in das Ofeninnere kann, wie dargestellt, in Form der Ringkanäle oder aber auch durch die Ringkanäle abdeckende Ringscheiben mit Austrittsöffnungen längs des Umfangs ausgebildet sein. Das äußere Rohr 13 ist im Mauerwerk verankert. Es ist ferner im äußeren Bereich der Ofenwand von einem geschlossenen Rohrabschnitt 20 umgeben, der einen Einlaß 21 für ein gasförmiges Medium sowie an dem der Düsenmündung zugekehrten Ende längs seines Umfangs verteilte Gasaustrittsöffnungen 22 aufweist. Ferner sind an der Außenfläche dieses Rohrabschnittes 20 zwei konzentrische Scheiben 23 aufgebracht. Der Rohrabschnitt 20 dient einschließlich der Scheiben 23 dazu, die zwischen der Feuerfestmasse und dem äußeren Mantelrohr 13 zurückströmenden brennbaren Gase daran zu hindern, bis nach außen zu gelangen.

Während des Frischprozesses werden durch den zentralen Kanal 17 Sauerstoff oder sauerstoffhaltige Gase, wie $CO_2$, eingeblasen. Durch den ersten Ringkanal 18 und durch den zweiten Ringkanal 19 werden jeweils eine mittels eines Trägergases zerstäubte Flüssigkeit eingeblasen. Als Flüssigkeit werden hierbei Gemische aus Hydroxylverbindungen und Wasser, vorzugsweise aus Alkohol und Wasser verwendet. Als Trägergas eignen sich inerte Gase wie Stickstoff und Argon oder sauerstoffhaltige Gase wie CO, $CO_2$, Luft, $O_2$. Der Zerstäubung der Flüssigkeit mittels des Trägergases kann bereits vor dem Eintritt in den betreffenden Ringkanal erfolgen, vorzugsweise wird die Flüssigkeit jedoch innerhalb der Düse mittels des Trägergases zerstäubt. Zu diesem Zweck sind bei der Düse nach Fig. 2 für die Ringkanäle 18 und 19 jeweils zwei Einlässe vorgesehen, nämlich ein Gaseinlaß 15a bzw. 16a für das Trägergas und ein Flüssigkeitseinlaß 15b bzw. 16b für die Flüssigkeit. Das Trägergas wird hierbei jeweils über einen Ringspalt 24 bzw. 25 in den Ringkanal 18 bzw. 19 eingeführt und nimmt die über die Einlässe 15b und 16b zugeführte Flüssigkeit in feinverteilter Form mit. Da die Flüssigkeit bereits eine ausreichende Strecke vor dem Düsenkopf, d. h. der Mündung der Düse im Schmelzbad, zerstäubt wird, kann sie sich selbst bei hohen Strömungsgeschwindigkeiten unter Wärmeentzug der Umgebung ausreichend erwärmen und bereits innerhalb der Düse verdampfen, wodurch eine gute Kühlung des Düsenhalses erzielt wird. Das Schutzfluid dissoziiert im unmittelbaren Bereich des Düsenkopfes aufgrund der dort herrschenden hohen Temperaturen, wobei der dem Schmelzbad zugewandte Teil der Einblasvorrichtung gekühlt und vor Verschleiß und Abbrand geschützt wird. Wird als Flüssigkeit ein Gemisch aus Hydroxylen und Wasser verwendet, so läßt sich der Siedepunkt im Vergleich zur Verwendung von Wasser erniedrigen und die damit verbundene früher einsetzende Verdampfung verstärkt zur Kühlung des noch im Feuerfestmaterial liegenden Teils der Düse nutzen, so daß auch das Feuerfestmaterial stärker gekühlt wird und dadurch einen geringeren Verschleiß zeigt. Je nach Art der Hydroxyle genügen hierbei bereits wenige Gewichtsprozente, um die gewünschte Herabsetzung des Siedepunktes der Flüssigkeit zu erzielen.

Dem Rohrabschnitt 20 wird Stickstoff zugeführt, und zwar nur so viel, daß gerade durch das aus den Austrittsöffnungen 22 austretende Stickstoffgas ein Zurückströmen der brennbaren Gase zwischen der Feuerfestmasse und dem äußeren Mantelrohr 13 verhindert wird.

Es werden im folgenden die Verfahrensbedingungen eines bevorzugten Ausführungsbeispieles angegeben.

Beispiel 1

| Innenrohr 11 | Innendurchmesser 14 mm |
| | Außendurchmesser 16 mm |
| erstes Mantelrohr 12 | Innendurchmesser 18 mm |
| | Außendurchmesser 20 mm |
| zweites Mantelrohr 13 | Innendurchmesser 22 mm |
| | Außendurchmesser 32 mm |

Druck und Durchflußmengen der Gase, Gasgemische bzw. Flüssigkeiten, gemessen in den Zuleitungen zu den Kanälen 17, 18 und 19, d. h. vor den Gaseinlässen 14, 15a und 16a sowie den Flüssigkeitseinlässen 15b und 16b :

| | Medium | Druck (bar) | Durchflußmenge |
|---|---|---|---|
| zentraler Kanal | sauerstoffhaltiges Gas ($O_2$) | ca. 3,5 | ca. 4 $Nm^3$/min |
| 1. Ringkanal 18 | Trägergas ($N_2$) | ca. 2,5 | ca. 0,3 $Nm^3$/min |
| | Flüssigkeit (Hydroxyle + $H_2O$) | ca. 2,5 | ca. 0,4 l/min |
| 2. Ringkanal 19 | Trägergas ($N_2$) | ca. 2,5 | ca. 0,3 $Nm^3$/min |
| | Flüssigkeit (Hydroxyle + $H_2O$) | ca. 2,5 | ca. 0,4 l/min |

3

Versuche haben ergeben, daß die Werte innerhalb der folgenden Bereiche liegen können :

| | Medium | Druck (bar) | Durchflußmenge |
|---|---|---|---|
| zentraler Kanal 17 | sauerstoffhaltiges Gas ($O_2$) | 2,5 bis 4,5 | 2 bis 5 $Nm^3$/min |
| 1. Ring-kanal 18 | Trägergas ($N_2$) Flüssigkeit (Hydroxyle + $H_2O$) | 2 bis 3,5 / 4 bis 6,0 | 0,2 bis 0,6 $Nm^3$/min / 0,3 — 0,7 l/min |
| 2. Ring-kanal 19 | Trägergas ($N_2$) Flüssigkeit (Hydroxyle + $H_2O$) | 2 bis 3,5 / 4 bis 6,0 | 0,2 — 0,6 $Nm^3$/min / 0,3 — 0,7 l/min |

Besonders gute Ergebnisse im Hinblick auf die Haltbarkeit wurden erzielt, wenn die folgenden Bereiche eingehalten wurden :

| | Medium | Druck (bar) | Durchflußmenge |
|---|---|---|---|
| zentraler Kanal 17 | sauerstoffhaltiges Gas ($O_2$) | 3,0 bis 4,0 | 3,0 bis 4,0 $Nm^3$/min |
| 1. Ring-kanal 18 | Trägergas ($N_2$) Flüssigkeit (Hydroxyle + $H_2O$) | 3,0 bis 3,5 / 4,5 bis 5,5 | 0,3 — 0,5 $Nm^3$/min / 0,4 — 0,6 l/min |
| 2. Ring-kanal 19 | Trägergas ($N_2$) Flüssigkeit (Hydroxyle + $H_2O$) | 3,0 bis 3,5 / 4,5 bis 5,5 | 0,3 — 0,5 $Nm^3$/min / 0,4 — 0,6 l/min |

Die beschriebene Einblasvorrichtung gemäß Fig. 2 weist Einlässe 15b und 16b für das flüssige Medium sowie Einlässe 15a und 16a für das Trägergas auf, mit dem das flüssige Medium zerstäubt wird. Die Einlässe für das Trägergas sind jeweils über einen Ringraum durch Ringspalte 24 bzw. 25 mit dem zugehörigen Ringkanal 18 bzw. 19 verbunden, und zwar an einer Stelle, die in Strömungsrichtung hinter der Einspeisestelle des flüssigen Mediums in den betreffenden Ringkanal liegt. Die Ringspalte 24 bzw. 25 sind hierbei schräg in Strömungsrichtung geneigt. Die Ringspaltbreite kann einstellbar ausgebildet sein, um den Grad der Zerstäubung verändern und auf das Optimum einstellen zu können.

**Patentansprüche**

1. Verfahren zum Schutz der Düsen und der feuerfesten Auskleidung eines metallurgischen Gefäßes zum Frischen einer Metallschmelze, insbesondere von Roheisen, im Bereich einer unterhalb der Badoberfläche angeordneten Einblasvorrichtung mit einer Düse aus wenigstens drei konzentrischen Rohren, durch die ein zentraler Kanal und wenigstens zwei Ringkanäle gebildet werden, bei dem ferner durch den zentralen Kanal ein sauerstoffhaltiges Gas, durch einen Ringkanal mittels eines Trägergases ein Wasser enthaltendes Fluid im zerstäubten oder im verdampften Zustand und durch einen weiteren Ringkanal ein Wasser enthaltendes Fluid zugeführt werden, dadurch gekennzeichnet, daß durch die Ringkanäle als Schutzfluid ein Gemisch aus wenigstens einer Hydroxyl-Verbindung und Wasser eingeblasen wird.

2. Verfahren nach Anspruch 1, dadurch gekennzeichnet, daß das Gemisch aus Hydroxylverbindungen und Wasser wenigstens 40 Gewichtsprozente Wasser enthält.

# 0 053 802

3. Verfahren nach Anspruch 1 oder 2, dadurch gekennzeichnet, daß das Gemisch aus Hydroxylverbindungen und Wasser wenigstens 5 Gewichtsprozente Hydroxylverbindungen enthält.

4. Verfahren nach einem der Ansprüche 1 bis 3, dadurch gekennzeichnet, daß die Hydroxylverbindungen aus der Gruppe der flüssigen Alkohole ausgewählt sind.

5. Verfahren nach Anspruch 4, dadurch gekennzeichnet, daß die Hydroxylverbindungen aus der Gruppe der aliphatischen Alkohole Methanol, Äthanol, Propanol und Butanol ausgewählt sind.

6. Verfahren nach einem der Ansprüche 1 bis 5, dadurch gekennzeichnet, daß das Trägergas ein inertes Gas ist.

7. Verfahren nach einem der Ansprüche 1 bis 5, dadurch gekennzeichnet, daß das Trägergas ein sauerstoffhaltiges Gas (CO, $CO_2$, Luft) ist.

8. Verfahren nach einem der Ansprüche 1 bis 7, dadurch gekennzeichnet, daß die Durchflußmengen der durch die Ringkanäle (18, 19) eingeblasenen Schutzfluide unabhängig voneinander über den Druck geregelt werden.

9. Verfahren nach einem der Ansprüche 1 bis 8, dadurch gekennzeichnet, daß bei einer aus drei Rohren (11, 12, 13) bestehenden Düse Druck und Durchflußmenge der Medien, gemessen in den Zuleitungen zu den Kanälen (17, 18, 19) der Düse wie folgt gewählt sind :

|  | Medium | Druck (bar) | Durchflußmenge |
|---|---|---|---|
| zentraler Kanal 17 | sauerstoffhaltiges Gas ($O_2$) | 2,5 bis 4,5 | 2 bis 5 $Nm^3$/min |
| 1. Ringkanal 18 | Trägergas ($N_2$) Flüssigkeit (Hydroxyle + $H_2O$) | 2 bis 3,5 <br> 4 bis 6,0 | 0,2 bis 0,6 $Nm^3$/min <br> 0,3 - 0,7 l/min |
| 2. Ringkanal 19 | Trägergas ($N_2$) Flüssigkeit (Hydroxyle + $H_2O$) | 2 bis 3,5 <br> 4 bis 6,0 | 0,2 - 0,6 $Nm^3$/min <br> 0,3 - 0,7 l/min |

10. Verfahren nach Anspruch 9, dadurch gekennzeichnet, daß Druck und Durchsatz der Medien wie folgt gewählt sind :

|  | Medium | Druck (bar) | Durchflußmenge |
|---|---|---|---|
| zentraler Kanal 17 | sauerstoffhaltiges Gas ($O_2$) | 3,0 bis 4,0 | 3,0 bis 4,0 $Nm^3$/min |
| 1. Ringkanal 18 | Trägergas ($N_2$) Flüssigkeit (Hydroxyle + $H_2O$) | 3,0 bis 3,5 <br> 4,5 bis 5,5 | 0,3 - 0,5 $Nm^3$/min <br> 0,4 - 0,6 l/min |
| 2. Ringkanal 19 | Trägergas ($N_2$) Flüssigkeit (Hydroxyle + $H_2O$) | 3,0 bis 3,5 <br> 4,5 bis 5,5 | 0,3 - 0,5 $Nm^3$/min <br> 0,4 - 0,6 l/min |

11. Einblasvorrichtung zur Durchführung des Verfahrens nach einem der Ansprüche 1 bis 10, mit einer Düse aus wenigstens drei radial im Abstand voneinander angeordneten konzentrischen Rohren (11, 12, 13), durch die ein zentraler Kanal (17) und Ringkanäle (18, 19) gebildet werden, sowie mit Einlässen (14, 15a, 15b, 16a, 16b) zum Einspeisen gasförmiger und flüssiger Medien in die Kanäle, dadurch gekennzeichnet, daß wenigstens einem der Ringkanäle (18, 19) ein Einlaß (15b, 16b) für das flüssige Medium und ein Einlaß (15a, 16a) für ein Trägergas zugeordnet ist und der letztere über einen Ringraum durch einen Ringspalt (24, 25) mit dem zugehörigen Ringkanal (18, 19) verbunden ist, und daß diese

5

Verbindungsstelle in Strömungsrichtung hinter der Einspeisestelle des flüssigen Mediums in den betreffenden Ringkanal (18, 19) liegt.

12. Einblasvorrichtung nach Anspruch 11, dadurch gekennzeichnet, daß der Ringspalt (24, 25) bezogen auf die Strömungsrichtung der Medien unter spitzem Winkel in den zugehörigen Ringkanal (18, 19) mündet.

13. Einblasvorrichtung nach Anspruch 11 oder 12, dadurch gekennzeichnet, daß die Breite des Ringspalts (24, 25) einstellbar ist.

## Claims

1. A process for protecting the nozzles and the refractory lining of a metallurgical vessel for refining a molten metal bath, in particular of pig iron, in the region of an injection device which is arranged beneath the surface of the bath, having a nozzle comprising at least three concentric pipes which form a central conduit and at least two annular conduits, wherein moreover an oxygen-bearing gas is supplied through the central conduit, a water-containing fluid is supplied in atomised or vaporised condition through an annular conduit by means of a carrier gas and a water-containing fluid is supplied through a further annular conduit, characterised in that a mixture comprising at least one hydroxyl compound and water is injected through the annular conduits as a protective fluid.

2. A process according to claim 1 characterised in that the mixture of hydroxyl compounds and water contains at least 40 % by weight of water.

3. A process according to claim 1 or claim 2 characterised in that the mixture of hydroxyl compounds and water contains at least 5 % by weight of hydroxyl compounds.

4. A process according to one of claims 1 to 3 characterised in that the hydroxyl compounds are selected from the group of liquid alcohols.

5. A process according to claim 4 characterised in that the hydroxyl compounds are selected from the group of aliphatic alcohols, methanol, ethanol, propanol and butanol.

6. A process according to one of claims 1 to 5 characterised in that the carrier gas is an inert gas.

7. A process according to one of claims 1 to 5 characterised in that the carrier gas is an oxygen-bearing gas ($CO$, $CO_2$, air).

8. A process according to one of claims 1 to 7 characterised in that the flow rates of the protective fluids which are injected through the annular conduits (18, 19) are regulated independently of each other by way of the pressure.

9. A process according to one of claims 1 to 8 characterised in that, with a nozzle consisting of three pipes (11, 12, 13), the pressure and the flow rate of the media, as measured in the supply lines to the conduits (17, 18, 19) of the nozzle, are selected as follows :

|  | Medium | Pressure (bar) | Flow rate |
|---|---|---|---|
| Central conduit 17 | oxygen-bearing gas ($O_2$) | 2.5 to 4.5 | Flow rate 2 to 5 $Nm^3$/min |
| 1st annular conduit 18 | carrier gas ($N_2$) | 2 to 3.5 | 0.2 to 0.6 $Nm^3$/min |
|  | liquid (hydroxyl + $H_2O$) | 4 to 6.0 | 0.3 - 0.7 l/min |
| 2nd annular conduit 19 | carrier gas ($N_2$) | 2 to 3.5 | 0.2 - 0.6 $Nm^3$/min |
|  | liquid (hydroxyl + $H_2O$) | 4 to 6.0 | 0.3 - 0.7 l/min. |

10. A process according to claim 9 characterised in that the pressure and the flow rate of the media are selected as follows :

(See Table page 7)

6

| | Medium | Pressure (bar) | Flow rate |
|---|---|---|---|
| Central conduit 17 | oxygen-bearing gas ($O_2$) | 3.0 to 4.0 | 3.0 to 4.0 $Nm^3$/min |
| 1st annular conduit | carrier gas ($N_2$) | 3.0 to 3.5 | 0.3 – 0.5 $Nm^3$/min |
| | liquid (hydroxyl + $H_2O$) | 4.5 to 5.5 | 0.4 – 0.6. 1/min |
| 2nd conduit 19 | carrier gas ($N_2$) | 3.0 to 3.5 | 0.3 – 0.5 $Nm^3$/min |
| | liquid (hydroxyl + $H_2O$) | 4.5 to 5.5 | 0.4 – 0.6 1/min. |

11. Injection apparatus for carrying out the process according to one of claims 1 to 10 having a nozzle comprising at least three radially spaced-apart concentric pipes (11, 12, 13) forming a central conduit (17) and annular conduits (18, 19) and further having inlets (14, 15a, 15b, 16a, 16b) for the introduction of gaseous and liquid media into the conduits, characterised in that associated with at least one of the annular conduits (18, 19) is an inlet (15b, 16b) for the liquid medium and an inlet (15a, 16a) for a carrier gas, and the latter communicates with the associated annular conduit (18, 19) by way of an annular space through an annular gap (24, 25), and that said communication is disposed in the direction of flow downstream of the point of introduction of the liquid medium into the respective annular conduit (18, 19).

12. Injection apparatus according to claim 11 characterised in that the annular gap (24, 25) opens into the associated annular conduit (18, 19) at an acute angle, with respect to the direction of flow of the media.

13. Injection apparatus according to claim 11 or claim 12 characterised in that the width of the annular gap (24, 25) is adjustable.


**Revendications**

1. Procédé de protection des buses et du garnissage réfractaire d'un récipient métallurgique destiné à l'affinage d'un métal fondu, notamment de fonte, dans la région d'un dispositif d'insufflation, disposé en-dessous de la surface libre du bain et comprenant une buse constituée d'au moins trois tubes concentriques qui forment un canal central et au moins deux canaux annulaires, un gaz contenant de l'oxygène étant en outre envoyé par le canal central, un fluide contenant de l'eau à l'état pulvérisé ou à l'état vaporisé étant envoyé par un canal annulaire au moyen d'un gaz porteur, et un fluide contenant de l'eau étant envoyé par un autre canal annulaire, caractérisé en ce qu'il consiste à insuffler, dans les canaux annulaires, comme fluide de protection, un mélange d'au moins un composé hydroxylé et d'eau.

2. Procédé suivant la revendication 1, caractérisé en ce que le mélange de composés hydroxylés et d'eau contient au moins 40 % en poids d'eau.

3. Procédé suivant la revendication 1 ou 2, caractérisé en ce que le mélange de composés hydroxylés et d'eau contient au moins 5 % en poids de composés hydroxylés.

4. Procédé suivant l'une des revendications 1 à 3, caractérisé en ce que les composés hydroxylés sont choisis dans le groupe des alcools liquides.

5. Procédé suivant la revendication 4, caractérisé en ce que les composés hydroxylés du groupe des alcools aliphatiques sont choisis parmi le méthanol, l'éthanol, le propanol et le butanol.

6. Procédé suivant l'une des revendications 1 à 5, caractérisé en ce que le gaz porteur est un gaz inerte.

7. Procédé suivant l'une des revendications 1 à 5, caractérisé en ce que le gaz porteur est un gaz contenant de l'oxygène (CO, $CO_2$, air).

8. Procédé suivant l'une des revendications 1 à 7, caractérisé en ce que les débits des fluides de protection insufflés dans les canaux annulaires (18, 19) sont réglés indépendamment l'un de l'autre par la pression.

9. Procédé suivant l'une des revendications 1 à 8, caractérisé en ce que, pour une buse constituée de trois tubes (11, 12, 13), on choisit la pression et les débits des milieux, mesurés dans les conduits d'amenée aux canaux (17, 18, 19) de la buse, de la manière suivante :

| | Milieu | Pression (bar) | Débit |
|---|---|---|---|
| Canal central 17 | Gaz contenant de l'oxygène ($O_2$) | 2,5 à 4,5 | 2 à 5 $m^3$ normaux/mn |
| 1er canal annulaire 18 | Gaz porteur ($N_2$) liquide (hydroxyle+$H_2O$) | 2 à 3,5 <br> 4 à 6,0 | 0,2 à 0,6 $m^3$normal/mn <br> 0,3 à 0,6 |
| 2ème canal annulaire 19 | Gaz porteur ($N_2$) liquide (hydroxyle+$H_2O$) | 2 à 3,5 <br> 4 à 6,0 | 0,2 à 0,6 $m^3$normal/mn <br> 0,3 à 0,7 1/mn |

10. Procédé suivant la revendication 9, caractérisé en ce qu'il consiste à choisir la pression et le débit des milieux de la manière suivante :

| | Milieu | Pression (bar) | Débit |
|---|---|---|---|
| Canal central 17 | Gaz contenant de l'oxygène ($O_2$) | 3,0 à 4,0 | 3,0 à 4,0 $m^3$normaux/mn |
| 1er canal annulaire 18 | Gaz porteur ($N_2$) liquide (hydroxyle+$H_2O$) | 3,0 à 3,5 <br> 4,5 à 5,5 | 0,3 à 0,5 $m^3$normal/mn <br> 0,4 à 0,6 1/mn |
| 2ème canal annulaire 19 | Gaz porteur ($N_2$) liquide (hydroxyle+$H_2O$) | 3,0 à 3,5 <br> 4,5 à 5,5 | 0,3 à 0,5 $m^3$normal/mn <br> 0,4 à 0,6 1/mn |

11. Dispositif d'insufflation pour la mise en œuvre du procédé suivant l'une des revendications 1 à 10, comprenant une buse constituée d'au moins trois tubes (11, 12, 13) concentriques, disposés radialement à distance les uns des autres et qui forment un canal central (17) et des canaux annulaires (18, 19), ainsi que des entrées (14, 15a, 15b, 16a, 16b) d'alimentation des canaux en milieux gazeux et liquides, caractérisé en ce qu'à au moins l'un des canaux annulaires (18, 19) est associée une entrée (15b, 16b) pour le milieu liquide et une entrée (15a, 16b) pour un gaz porteur et cette dernière communique par une chambre annulaire, en passant par une fente annulaire (24, 25), avec le canal annulaire (18, 19) correspondant et cet emplacement de communication se trouve en aval, suivant la direction d'écoulement, de l'emplacement d'alimentation du canal annulaire (18, 19) concerné en le milieu liquide.

12. Dispositif d'insufflation suivant la revendication 11, caractérisé en ce que la fente annulaire (24, 25) débouche dans le canal annulaire (18, 19) correspondant, en faisant un angle aigu avec la direction d'écoulement des milieux.

13. Dispositif d'insufflation suivant la revendication 11 ou 12, caractérisé en ce que la largeur de la fente annulaire (24, 25) est réglable.

# FIG.1

0 053 802

FIG.2